# EUROPÄISCHE PATENTSCHRIFT

(11) **EP 2 239 173 B1**
(45) Veröffentlichungstag und Bekanntmachung des Hinweises auf die Patenterteilung: **23.03.2016**
(21) Anmeldenummer: 10157955.5
(22) Anmeldetag: 26.03.2010
(51) Int. Cl.: B60T 15/02, F16K 31/122, B60T 15/18

(54) **Pneumatisch gesteuertes 3/2-Wegeventil zur Steuerung einer pneumatischen Feststellbremse und Verfahren zum Betreiben eines derartigen Ventils**
Pneumatically controlled 3/2-valve for controlling a pneumatic parking brake and method for operating such a valve
Valve 3/2 à commande pneumatique pour la commande d'un frein de stationnement pneumatique et procédé de commande pour une telle valve

(30) Priorität: 08.04.2009 DE 102009016983
(43) Veröffentlichungstag der Anmeldung: 13.10.2010
(73) Patentinhaber: KNORR-BREMSE Systeme für Nutzfahrzeuge GmbH, 80809 München (DE)
(72) Erfinder: Kaupert, Oliver, 80995 München (DE)
(74) Vertreter: Schönmann, Kurt

(56) Entgegenhaltungen:
- US-A1- 2006 192 425
- US-B1- 6 209 582

## Beschreibung

Die Erfindung betrifft ein pneumatisch gesteuertes 3/2-Wegeventil, insbesondere zur Steuerung einer pneumatischen Feststellbremse, mit einem in einer axialen Richtung in einem Gehäuse zwischen einem ersten Ventilsitz und einem zweiten Ventilsitz beweglichen Schaltkolben. Ein solches ventil ist z.B. aus US 6 209 582 bekannt.

Die Erfindung betrifft weiterhin ein Verfahren zum Betreiben eines pneumatisch gesteuerten 3/2-Wegeventils, insbesondere für eine pneumatische Feststellbremse, mit einem in einer axialen Richtung in einem Gehäuse zwischen einem ersten Ventilsitz und einem zweiten Ventilsitz beweglichen Schaltkolben.

Die Erfindung betrifft weiterhin eine pneumatisch betriebene Feststellbremse mit einem erfindungsgemäßen 3/2-Wegeventil.

Hersteller von Nutzfahrzeugen sind zunehmend bestrebt, durch die Integration von immer neuen elektronischen Funktionen in bereits vorhandene Komponenten zusätzliche Steuergeräte und die damit verbundene Komplexität zu vermeiden und Kosten zu senken. Damit verbunden ist jedoch eine Ansteigende Komplexität einzelner Module, in die immer mehr Funktionen integriert werden. Der Ausfall eines einzelnen Bauteils innerhalb eines solchen komplexen Moduls zieht dann oft den Austausch des gesamten Moduls nach sich, da das Austauschen des defekten Einzelteils oft nicht mehr möglich ist, ohne andere Funktionen des Moduls zu beeinträchtigen, und zieht eine komplette Neueinstellung des Moduls nach sich. Dies ist weder unter wirtschaftlichen noch unter Gewährleistungsaspekten vorteilhaft.

Aus diesem Grund werden die einzelnen Bauteile eines komplexen Moduls mechanisch sehr robust ausgeführt. Ein Beispiel für ein mechanisch sehr robust auszuführendes Bauteil ist ein 3/2-Wegeventil, welches als Bestandteil einer elektronischen Luftaufbereitungsanlage mit integrierter elektronischer Ansteuerung der Parkbremse das Betätigen der Parkbremse dauerhaft gewährleistet. Das verwendete 3/2-Wegeventil ist üblicherweise bistabil auszulegen und zwischen einer Parkstellung und einer Fahrstellung umschaltbar, wobei beispielsweise in der Parkstellung kein Steuerdruck anliegt während in der Fahrtstellung ein Steuerdruck angelegt ist.

Es sind im Stand der Technik bereis mehrere Möglichkeiten zur Verbesserung der mechanischen Stabilität eines derartigen 3/2-Wegeventils bekannt. Es wird dabei insbesondere auf eine Reduzierung der Belastung an einem Ventilsitz geachtet, da die im Bereich der Ventilsitze verwendeten Ventilsitzgummis besonders verschleißgefährdet sind. Beispielsweise kann ein fester Anschlag nach einer gewissen Eindrucktiefe vorgesehen sein, wobei der Ventilsitzradius zuerst in einer Schräge verläuft auf die dann ein ebenes Plateau zur gleichmäßigen Verteilung der Belastung auf eine große Fläche folgt. Problematisch bei dieser Konstruktion ist die Neigung des Ventilsitzgummis zum Ankleben, die insbesondere bei Hitze, Kälte und unter Einwirken von Öl, welches in der Druckluft vorhanden sein kann, verstärkt auftritt. Das Ankleben des Ventilsitzgummis ist jedoch wieder mit einem Ausfall des 2/3-Wegeventils gleichzusetzen.

Ebenfalls bekannt ist die Verwendung gefederter Dichtpillen, die zum Beispiel bei Magnetventilen zum Einsatz kommen können. Diese Lösung bedeutet jedoch zusätzliche Bauteile in Form einer zusätzlichen Feder und eines Abstützelementes für die Dichtpille, was die Herstellung des Ventils stark verteuert und somit ebenfalls unerwünscht ist.

Der vorliegenden Erfindung liegt daher die Aufgabe zugrunde, ein 3/2-Wegeventil bereitzustellen, bei dem geringe Kräfte pro Fläche auf die Ventilsitzgummis wirken und gleichzeitig die Neigung zum Ankleben gering ist.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen 3/2-Wegeventil dadurch auf, dass der Schaltkolben ein erstes Kolbenteil und ein zweites Kolbenteil umfasst, die separat in der axialen Richtung beweglich sind, dass der erste Ventilsitz von dem ersten Kolbenteil verschließbar ist, dass der zweite Ventilsitz von dem zweiten Kolbenteil verschließbar ist und dass eine Anlagefläche zwischen den beiden Kolbenteilen vorgesehen ist, über die das erste Kolbenteil das zweite Kolbenteil in einer ersten Bewegungsrichtung mitnimmt und das zweite Kolbenteil das erste Kolbenteil in einer zweiten Bewegungsrichtung mitnimmt. Durch die zweiteilige Ausgestaltung des Schaltkolbens, wobei der erste Ventilsitz von dem ersten Kolbenteil verschließbar ist und der zweite Ventilsitz von dem zweiten Kolbenteil verschließbar ist, wird die an den beiden Ventilsitzen auf die jeweiligen Ventilsitzgummis einwirkende Kraft reduzierbar. Dies wird insbesondere durch die separate Beweglichkeit des ersten Kolbenteils und des zweiten Kolbenteils erreicht, die einander jedoch in der ersten beziehungsweise der zweiten Bewegungsrichtung über die Anlagefläche mitnehmen können, wodurch die druckbeaufschlagten Wirkflächen der beiden Kolbenteile anpassbar werden, um die auf die Ventilsitzgummis wirkenden maximalen Kräfte pro Fläche zu beschränken, ohne das Schaltverhalten des Ventils nach außen zu ändern.

Vorteilhafterweise kann vorgesehen sein, dass das erste Kolbenteil in einer Bohrung innerhalb des zweiten Kolbenteils angeordnet ist. Dies erlaubt eine einfache passgenaue Fertigung der beiden Kolbenteile, die beispielsweise einfach ineinander geschoben werden können.

Nützlicherweise kann vorgesehen sein, dass eine Luftführung zwischen dem ersten Kolbenteil und dem zweiten Kolbenteil vorgesehen ist, über den ein Druckausgleich zwischen einem ersten Bereich und einem zweiten Bereich auf verschiedenen Seiten des Schaltkolbens erfolgt. Durch das Vorsehen der Luftführung zwischen dem ersten Kolbenteil und dem zweiten Kolbenteil kann die Fertigung des Schaltkolbens weiter vereinfacht werden, da beispielsweise eine größere Fertigungstoleranz im Bereich zwischen dem ersten Kolbenteil und dem zweiten Kolbenteil zulässig wird.

Vorzugsweise ist vorgesehen, dass die erste Bewegungsrichtung entgegengesetzt zur zweiten Bewegungsrichtung ist. Auf diese Weise kann besonders leicht die gegenseitige Mitnahme der beiden Kolbenteile in jeweils eine Bewegungsrichtung realisiert werden.

Besonders bevorzugt ist, dass die erste Bewegungsrichtung von dem zweiten Ventilsitz zu dem ersten Ventilsitz verläuft und dass die zweite Bewegungsrichtung von dem ersten Ventilsitz zu dem zweiten Ventilsitz verläuft.

Es kann vorgesehen sein, dass das erste Kolbenteil auf seiner dem ersten Ventilsitz abgewandten Seite einen festen Anschlag aufweist. Der feste Anschlag beschränkt die Beweglichkeit des ersten Kolbenteils in der axialen Richtung und verbessert daher den Schutz des zweiten Ventilsitzgummis.

Es kann auch vorgesehen sein, dass das zweite Kolbenteil auf seiner dem zweiten Ventilsitz abgewandten Seite einen festen Grenzanschlag aufweist. Der feste Grenzanschlag beschränkt die Beweglichkeit des zweiten Kolbenteils in der axialen Richtung und verbessert daher den Schutz des ersten Ventilsitzgummis.

Weiterhin kann vorgesehen sein, dass eine Auflagefläche des ersten Ventilsitzes kleiner ist als eine weitere Auflagefläche des zweiten Ventilsitzes. Diese Maßnahme erlaubt eine besonders raumsparende Ausführung des 3/2-Wegeventils, wobei die auftretenden Kräfte pro Fläche insbesondere auf das zweite Ventilsitzgummi durch die vergrößerte Auflagefläche zusätzlich variierbar ist.

Das gattungsgemäße Verfahren wird dadurch weiterentwickelt, dass der Schaltkolben ein erstes Kolbenteil und ein zweites Kolbenteil umfasst, die separat in der axialen Richtung bewegt werden, dass der erste Ventilsitz von dem ersten Kolbenteil verschlossen wird, dass der zweite Ventilsitz von dem zweiten Kolbenteil verschlossen wird und dass das erste Kolbenteil das zweite Kolbenteil in einer ersten Bewegungsrichtung mitnimmt und das zweite Kolbenteil das erste Kolbenteil in einer zweiten Bewegungsrichtung mitnimmt.

Auf diese Weise werden die Vorteile und Besonderheiten des erfindungsgemäßen 3/2-Wegeventils auch im Rahmen eines Verfahrens umgesetzt.

Die Erfindung wird nun mit Bezug auf die begleitenden Zeichnungen anhand einer bevorzugten Ausführungsform beispielhaft erläutert.

Es zeigen:
- Figur 1: ein erfindungsgemäßes 3/2-Wegeventil in einer ersten Schaltposition;
- Figur 2: ein erfindungsgemäßes 3/2-Wegeventil in einer zweiten Schaltposition und
- Figur 3: ein erfindungsgemäßes 3/2-Wegeventil in einer dritten Schaltposition.

In den folgenden Zeichnungen bezeichnen gleiche Bezugszeichen gleiche oder gleichartige Teile.

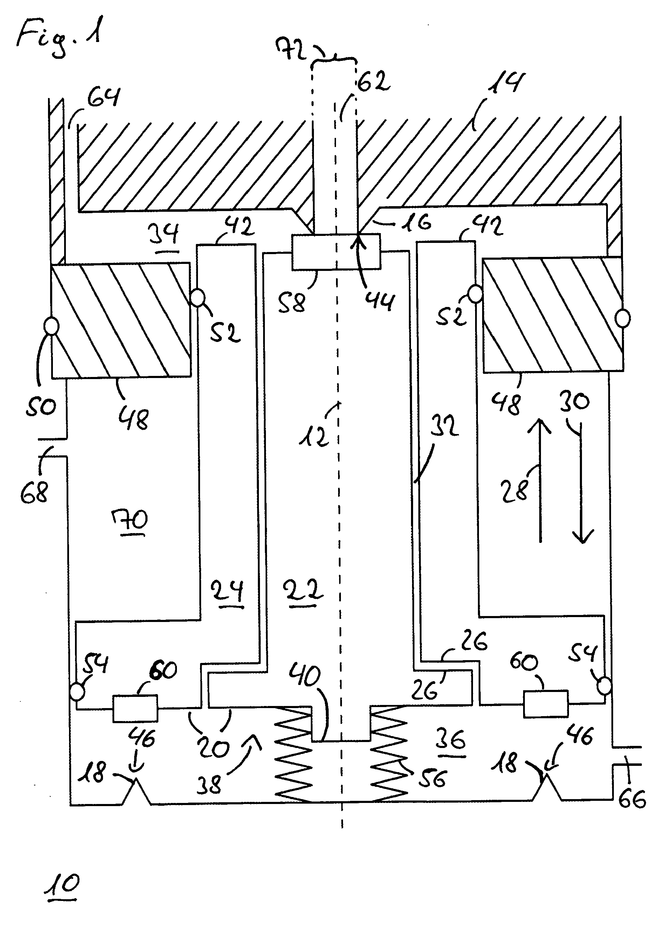

Figur 1 zeigt ein erfindungsgemäßes 3/2-Wegeventil in einer ersten Schaltposition. Das dargestellte 3/2-Wegeventil 10 verfügt über einen ersten Anschluss 62, einen zweiten Anschluss 64, einen dritten Anschluss 66 und einen Steueranschluss 68. Der erste Anschluss 62 kann beispielsweise der Versorgung mit einem Druckmittel, der zweite Anschluss 64 beispielsweise ein Ausgangsanschluss und der dritte Anschluss 66 beispielsweise der Entlüftung dienen oder ein zweiter Versorgungsanschluss sein. Das 3/2-Wegeventil 10 umfasst ein Gehäuse 14 in dem ein Einsatz 48 und ein Schaltkolben 20 angeordnet sind, wobei der Schaltkolben 20 in einer axialen Richtung 12 beweglich gelagert ist. Der Schaltkolben 20 umfasst ein erstes Kolbenteil 22 und ein zweites Kolbenteil 24 wobei das erste Kolbenteil 22 in der axialen Richtung 12 in eine Bohrung 38 in das zweite Kolbenteil 24 eingeschoben ist. Das erste Kolbenteil 22 und das zweite Kolbenteil 24 sind dabei in der axialen Richtung 12 in einer ersten Bewegungsrichtung 28 beziehungsweise in einer zweiten Bewegungsrichtung 30 separat voneinander beweglich, wobei über eine Anlagefläche 26 in der jeweils entgegengesetzten Bewegungsrichtung 30, 28 das erste Kolbenteil 22 das zweite Kolbenteil 24 mitnimmt beziehungsweise das zweite Kolbenteil 24 das erste Kolbenteil 22 mitnimmt. Zwischen dem ersten Kolbenteil 22 und dem zweiten Kolbenteil 24 besteht eine Luftführung 32, die einen ständigen Druckausgleich zwischen einem ersten Bereich 34 und einem zweiten Bereich 36 auf beiden Seiten des Schaltkolbens 20 ermöglicht. Das erste Kolbenteil 22 umfasst einen festen Anschlag 40 auf der dem ersten Ventilsitzgummi 58 abgewandten Seite und das zweite Kolbenteil 24 umfasst einen festen Grenzanschlag 42 auf der dem zweiten Ventilsitzgummi 60 abgewandten Seite, wobei der Anschlag 40 und der Grenzanschlag 42 die Beweglichkeit des ersten Kolbenteils 22 beziehungsweise des zweiten Kolbenteils 24 beschränken. Über eine Dichtung 50, einen ersten Dichtring 52 und einen zweiten Dichtring 54 werden der erste Bereich 34, der zweite Bereich 36 und ein Steuerraum 70, in den der Steueranschluss 68 mündet, gegeneinander abgedichtet. Der erste Anschluss 62 mündet an einem ersten Ventilsitz 16 in den ersten Bereich 34. Der zweite Anschluss 64 mündet ebenfalls in den ersten Bereich 34 während der dritte Anschluss 66 in den zweiten Bereich 36 mündet. In der in der Figur 1 dargestellten Schaltposition des 3/2-Wegeventils 10 wird das erste Kolbenteil 22 von einer Feder 56 in der axialen Richtung 12 gegen den Ventilsitz 16 gedrückt, wobei ein erstes Ventilsitzgummi 58 an einer Auflagefläche 44 des ersten Ventilsitzes 16 anliegt und die Verbindung zwischen dem ersten Anschluss 62 und dem ersten Bereich 34 verschließt. Weiterhin ist in der dargestellten ersten Schaltposition der Steueranschluss 68 und damit der Steuerraum 70 drucklos und der zweite Anschluss 64 und der dritte Anschluss 66 sind über die Luftführung 32 miteinander verbunden und entlüftet. An dem ersten Anschluss 62 liegt ein Versorgungsdruck an, wobei das erste Kolbenteil 22 aufgrund der durch die Feder 56 in der axialen Richtung 12 ausgeübten Kraft mit Hilfe des ersten Ventilsitzgummis 58 den ersten Ventilsitz 16 verschließt und dabei den ersten Anschluss 62 absperrt. Das zweite Kolbenteil 24 ist bei der in der Figur 1 dargestellten ersten Schaltposition ohne Funktion. Insbesondere liegt ein zweites Ventilsitzgummi 60 nicht an einer weiteren Auflagefläche 46 eines zweiten Ventilsitzes 18 an, wodurch der dritte Anschluss 66 von dem zweiten Anschuss 64 getrennt würde. Dies wird durch das Mitnehmen des zweiten Kolbenteils 24 von dem ersten Kolbenteil 22 in der ersten Bewegungsrichtung 28 aufgrund der Anlagefläche 26 erreicht. Da lediglich an dem ersten Anschluss 62 ein Druck anliegt, ist eine erste effektive Druckwirkfläche 72 gegeben, die das erste Ventilsitzgummi 58 entlastet. Wird das dargestellte 3/2-Wegeventil 10 als ein Feststellbremsventil verwendet, so könnte die dargestellte erste Schaltposition bei einem parkenden Fahrzeug mit geschlossener Feststellbremse eingenommen werden.

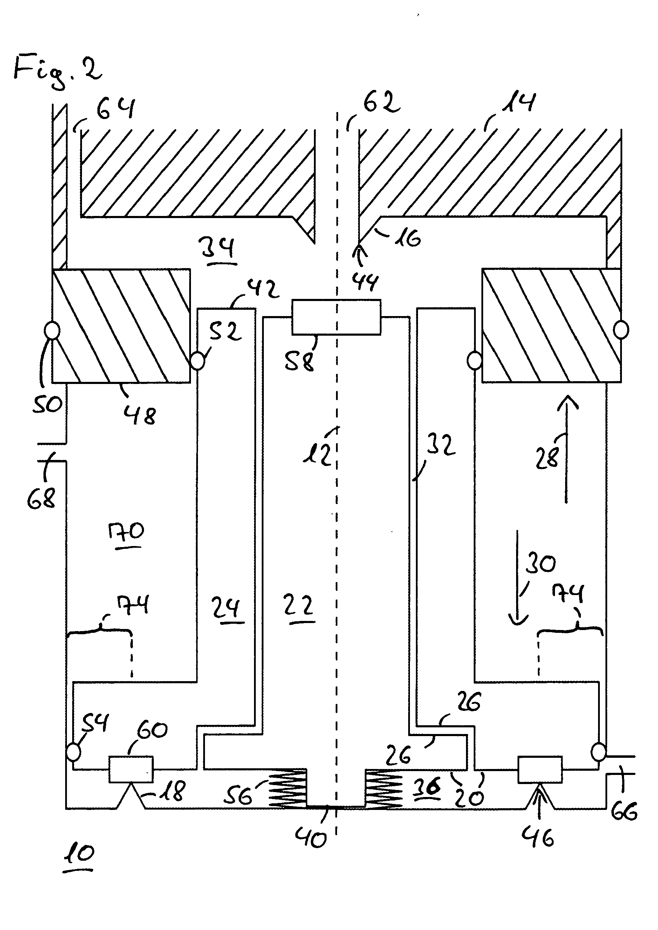

Figur 2 zeigt ein erfindungsgemäßes 3/2-Wegeventil in einer zweiten Schaltposition. Dargestellt in der Figur 2 das aus der Figur 1 bereits bekannte 3/2-Wegeventil 10, wobei im Unterschied zu der Figur 1 der Steuerraum 70 über den Steueranschluss 68 mit Druck beaufschlagt ist. Auf diese Weise entsteht eine zweite effektive Druckwirkfläche 74, die das zweite Kolbenteil 24 in der zweiten Bewegungsrichtung 30 entlang der axialen Richtung 12 verschiebt. Die Bewegung des zweiten Kolbenteils 24 endet, sobald das zweite Ventilsitzgummi 60 an einer weiteren Auflagefläche 46 des zweiten Ventilsitzes 18 anliegt und dabei den dritten Anschluss 66 von dem zweiten Bereich 36 trennt. Aufgrund der Anlagefläche 26 wird das erste Kolbenteil 22 entgegen der durch die Feder 56 entlang der axialen Richtung 12 ausgeübten Kraft von dem zweiten Kolbenteil 24 in der zweiten Bewegungsrichtung 30 mitgenommen, wobei das erste Ventilsitzgummi von dem ersten Ventilsitz 16 abhebt und eine Verbindung zwischen dem ersten Anschluss 62 und dem ersten Bereich 34 hergestellt wird. Ein an dem ersten Anschluss 62 anliegender Versorgungsdruck steht daher auch an dem zweiten Anschluss 64 an und kann beispielsweise zum Öffnen einer Feststellbremse für einen Fahrbetrieb eines Fahrzeugs verwendet werden. Der dritte Anschluss 66 ist weiterhin drucklos. Die weitere Auflagefläche 46 des zweiten Ventilsitzes ist deutlich größer gewählt als die Auflagefläche 44 des ersten Ventilsitzes 16, um die auf das zweite Ventilsitzgummi 60 wirkende effektive Druckkraft pro Fläche gering zu halten. Der feste Anschlag 40 kann dabei zusätzlich eine Beschränkung der Eindrucktiefe der weiteren Auflagefläche 46 in das zweite Ventilsitzgummi bewirken.

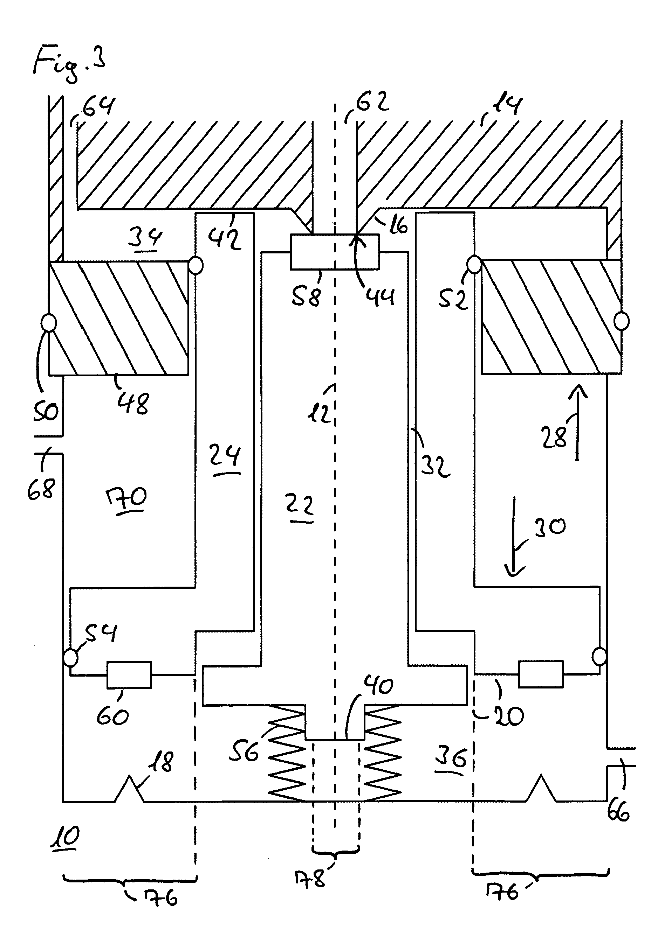

Figur 3 zeigt ein erfindungsgemäßes 3/2-Wegeventil in einer dritten Schaltposition. Bei der in Figur 3 dargestellten Schaltposition des 3/2-Wegeventils ist der Steueranschluss 68 wieder drucklos. Weiterhin ist der erste Anschluss 62 drucklos während der dritte Anschluss 66 mit Druck beaufschlagt ist. Ausgehend von der aus der Figur 1 bekannten ersten Schaltposition wird daher das zweite Kolbenteil 24 in der ersten Bewegungsrichtung 28 unabhängig von dem ersten Kolbenteil 22 bis zu einem Grenzanschlag 42 bewegt. Die Verbindung zwischen dem ersten Bereich 34 und dem zweiten Bereich 36 über die Luftführung 32 wird dabei nicht beeinträchtigt. Da der Steueranschluss 68 und der erste Anschluss 62 drucklos sind, ist das erste Kolbenteil bereits durch die Feder 56 über das erste Ventilsitzgummi 58 gegen den ersten Ventilsitz 16 gepresst und trennt den ersten Anschluss 62 von dem ersten Bereich 34. Durch das Belüften des dritten Anschlusses 66 wird eine zusätzliche effektive Druckkraft auf das erste Kolbenteil 22 und auf das zweite Kolbenteil 24 in der ersten Bewegungsrichtung 28 ausgeübt. Dabei entstehen eine dritte effektive Druckwirkfläche 76 und eine vierte effektive Druckwirkfläche 78, wobei die dritte effektive Druckwirkfläche 76 nur auf das zweite Kolbenteil 24 wirkt und von dem Grenzanschlag 42 aufgefangen wird, während die vierte effektive Druckwirkfläche 78 das erste Ventilsitzgummi 58 zusätzlich zu der von der Feder 56 verursachten Kraft gegen die Auflagefläche 44 des ersten Ventilsitzes 16 presst. Da das erste und das zweite Kolbenteil 22, 24 separat beweglich sind, entspricht die vierte effektive Druckwirkfläche 78, die das erste Ventilsitzgummi 58 zusätzlich belastet, etwa dem Ventilsitzdurchmesser des ersten Ventilsitzes 16. Bei einem einteiligen Kolben würde die aus einer gemeinsamen Kolbenwirkfläche resultierende Kraft auf den ersten Ventilsitz 16 einwirken. Die Belastung für das erste Ventilsitzgummi 58 wäre entsprechend hoch, wofür das Material nicht dauerhaft geeignet ist. Ein frühzeitiger Ausfall des 3/2-Wegeventils 10 wäre die Folge. Durch die zweiteilige Ausführung des Schaltkolbens 20 wird die auf das zweite Kolbenteil 24 wirkende Druckkraft an dem Grenzanschlag 42 aufgefangen und belastet nicht das erste Ventilsitzgummi 58 an dem ersten Ventilsitz 18. Bei der dargestellten dritten Schaltposition ist der zweite Anschluss 64 über den dritten Anschluss 66 mit Druck beaufschlagt. Dies kann im Rahmen eines Feststellbremsventils beispielsweise für eine Anhängertestfunktion verwendet werden.

### Bezugszeichenliste

- 10: 3/2-Wegeventil
- 12: axiale Richtung
- 14: Gehäuse
- 16: erster Ventilsitz
- 18: zweiter Ventilsitz
- 20: Schaltkolben
- 22: erstes Kolbenteil
- 24: zweites Kolbenteil
- 26: Anlagefläche
- 28: erste Bewegungsrichtung
- 30: zweite Bewegungsrichtung
- 32: Luftführung
- 34: erster Bereich
- 36: zweiter Bereich
- 38: Bohrung
- 40: Anschlag
- 42: Grenzanschlag
- 44: Auflagefläche
- 46: weitere Auflagefläche
- 48: Einsatz
- 50: Dichtung
- 52: erster Dichtring
- 54: zweiter Dichtring
- 56: Feder
- 58: erstes Ventilsitzgummi
- 60: zweites Ventilsitzgummi
- 62: erster Anschluss
- 64: zweiter Anschluss
- 66: dritter Anschluss
- 68: Steueranschluss
- 70: Steuerraum
- 72: erste effektive Druckwirkfläche
- 74: zweite effektive Druckwirkfläche
- 76: dritte effektive Druckwirkfläche
- 78: vierte effektive Druckwirkfläche

## Patentansprüche

1. Pneumatisch gesteuertes 3/2-Wegeventil (10), insbesondere zur Steuerung einer pneumatischen Feststellbremse, mit einem in einer axialen Richtung (12) in einem Gehäuse (14) zwischen einem ersten Ventilsitz (16) und einem zweiten Ventilsitz (18) beweglichen Schaltkolben (20), **dadurch gekennzeichnet,**
- **dass** der Schaltkolben (20) ein erstes Kolbenteil (22) und ein zweites Kolbenteil (24) umfasst, die separat in der axialen Richtung (12) beweglich sind,
- **dass** der erste Ventilsitz (16) von dem ersten Kolbenteil (22) verschließbar ist,
- **dass** der zweite Ventilsitz (18) von dem zweiten Kolbenteil (24) verschließbar ist und
- **dass** eine Anlagefläche (26) zwischen den beiden Kolbenteilen (22, 24) vorgesehen ist, über die das erste Kolbenteil (22) das zweite Kolbenteil (24) in einer ersten Bewegungsrichtung (28) mitnimmt und das zweite Kolbenteil (24) das erste Kolbenteil (22) in einer zweiten Bewegungsrichtung (30) mitnimmt.

2. 3/2-Wegeventil (10) nach Anspruch 1, **dadurch gekennzeichnet, dass** das erste Kolbenteil (22) in einer Bohrung (38) innerhalb des zweiten Kolbenteils (24) angeordnet ist.

3. 3/2-Wegeventil (10) nach Anspruch 1 oder 2, **dadurch gekennzeichnet, dass** eine Luftführung (32) zwischen dem ersten Kolbenteil (22) und dem zweiten Kolbenteil (24) vorgesehen ist, über den ein Druckausgleich zwischen einem ersten Bereich (34) und einem zweiten Bereich (36) auf verschiedenen Seiten des Schaltkolbens (20) erfolgt.

4. 3/2-Wegeventil (10) nach einem der vorhergehenden Ansprüche, **dadurch gekennzeichnet, dass** die erste Bewegungsrichtung (28) entgegengesetzt zur zweiten Bewegungsrichtung (30) ist.

5. 3/2-Wegeventil (10) nach einem der vorhergehenden Ansprüche, **dadurch gekennzeichnet,**
- **dass** die erste Bewegungsrichtung (28) von dem zweiten Ventilsitz (18) zu dem ersten Ventilsitz (16) verläuft und
- **dass** die zweite Bewegungsrichtung (30) von dem ersten Ventilsitz (16) zu dem zweiten Ventilsitz (18) verläuft.

6. 3/2-Wegeventil (10) nach einem der vorhergehenden Ansprüche, **dadurch gekennzeichnet, dass** das erste Kolbenteil (22) auf seiner dem ersten Ventilsitz (16) abgewandten Seite einen festen Anschlag (40) aufweist.

7. 3/2-Wegeventil (10) nach einem der vorhergehenden Ansprüche, **dadurch gekennzeichnet, dass** das zweite Kolbenteil (22) auf seiner dem zweiten Ventilsitz (18) abgewandten Seite einen festen Grenzanschlag (42) aufweist.

8. 3/2-Wegeventil (10) nach einem der vorhergehenden Ansprüche, **dadurch gekennzeichnet, dass** eine Auflagefläche (44) des ersten Ventilsitzes (16) kleiner ist als eine weitere Auflagefläche (46) des zweiten Ventilsitzes (18).

9. Pneumatisch betriebene Feststellbremse mit einem 3/2-Wegeventil (10) nach einem der vorhergehenden Ansprüche.

10. Verfahren zum Betreiben eines pneumatisch gesteuerten 3/2-Wegeventils (10), insbesondere für eine pneumatische Feststellbremse, mit einem in einer axialen Richtung (12) in einem Gehäuse (14) zwischen einem ersten Ventilsitz (16) und einem zweiten Ventilsitz (18) beweglichen Schaltkolben (20), **dadurch gekennzeichnet,**
- **dass** der Schaltkolben (20) ein erstes Kolbenteil (22) und ein zweites Kolbenteil (24) umfasst, die separat in der axialen Richtung (12) bewegt werden,
- **dass** der erste Ventilsitz (16) von dem ersten Kolbenteil (22) verschlossen wird,
- **dass** der zweite Ventilsitz (18) von dem zweiten Kolbenteil (24) verschlossen wird und
- **dass** das erste Kolbenteil (22) das zweite Kolbenteil (24) in einer ersten Bewegungsrichtung (28) mitnimmt und das zweite Kolbenteil (24) das erste Kolbenteil (24) in einer zweiten Bewegungsrichtung (30) mitnimmt.

## Claims

1. Pneumatically controlled 3/2-way valve (10), in particular for controlling a pneumatic parking brake, comprising a switching piston (20) movable in an axial direction (12) in a housing (14) between a first valve seat (16) and a second valve seat (18), **characterised in that**
- the switching piston (20) comprises a first piston part (22) and a second piston part (24), which are separately movable in the axial direction (12),
- the first valve seat (16) can be closed by the first piston part (22),
- the second valve seat (18) can be closed by the second piston part (24), and
- a contact surface (26) is provided between the two piston parts (22, 24), via which the first piston part (22) drives the second piston part (24) in a first direction of movement (28) and the second piston part (24) drives the first piston part (22) in a second direction of movement (30).

2. 3/2-way valve (10) according to claim 1, **characterised in that** the first piston part (22) is located in a bore (38) within the second piston part (24).

3. 3/2-way valve (10) according to claim 1 or 2, **characterised in that** an air duct (32) is provided between the first piston part (22) and the second piston part (24), via which air duct (32) pressure is balanced between a first region (34) and a second region (36) on different sides of the switching piston (20).

4. 3/2-way valve (10) according to any of the preceding claims, **characterised in that** the first direction of movement (28) is opposed to the second direction of movement (30).

5. 3/2-way valve (10) according to any of the preceding claims, **characterised in that**
- the first direction of movement (28) runs from the second valve seat (18) to the first valve seat (16), and
- the second direction of movement (30) runs from the first valve seat (16) to the second valve seat (18).

6. 3/2-way valve (10) according to any of the preceding claims, **characterised in that** the first piston part (22) has a fixed stop (40) on the side remote from the first valve seat (16).

7. 3/2-way valve (10) according to any of the preceding claims, **characterised in that** the second piston part (24) has a fixed limit stop (42) on the side remote from the second valve seat (18).

8. 3/2-way valve (10) according to any of the preceding claims, **characterised in that** a mounting surface (44) of the first valve seat (16) is smaller than a further mounting surface (46) of the second valve seat (18).

9. Pneumatically controlled parking brake having a 3/2-way valve (10) according to any of the preceding claims.

10. Method for operating a pneumatically controlled 3/2-way valve (10), in particular for a pneumatic parking brake, comprising a switching piston (20) movable in an axial direction (12) in a housing (14) between a first valve seat (16) and a second valve seat (18), **characterised in that**
- the switching piston (20) comprises a first piston part (22) and a second piston part (24), which are moved separately in the axial direction (12),
- the first valve seat (16) is closed by the first piston part (22),
- the second valve seat (18) is closed by the second piston part (24), and
- the first piston part (22) drives the second piston part (24) in a first direction of movement (28) and the second piston part (24) drives the first piston part (22) in a second direction of movement (30).

## Revendications

1. Vanne (10) 3/2 à commande pneumatique, notamment pour commander un frein de stationnement pneumatique, comprenant un piston (20) de manoeuvre mobile dans une direction (12) axiale dans une enveloppe (14) entre un premier siège (16) de vanne et un deuxième siège (18) de vanne, **caractérisée**
- **en ce que** le piston (20) de manoeuvre comprend une première partie (22) de piston et une deuxième partie (24) de piston, qui sont mobiles séparément dans la direction (12) axiale,
- **en ce que** le premier siège (16) de vanne peut être fermé par la première partie (22) de piston,
- **en ce que** le deuxième siège (18) de vanne peut être fermé par la deuxième partie (24) de piston et
- **en ce qu'**il est prévu, entre les deux parties (22, 24) de piston, une surface (26) de contact, par laquelle la première partie (22) de piston entraîne la deuxième partie (24) de piston dans un premier sens (28) de déplacement et la deuxième partie (24) de piston entraîne la première partie (22) de piston dans un deuxième sens (30) de déplacement.

2. Vanne (10) 3/2 suivant la revendication 1, **caractérisée en ce que** la première partie (22) de piston est montée dans un trou (38) à l'intérieur de la deuxième partie (24) de piston.

3. Vanne (10) 3/2 suivant la revendication 1 ou 2, **caractérisée en ce qu'**il est prévu, entre la première partie (22) de piston et la deuxième partie (24) de piston, une conduite (32) d'air, par laquelle s'effectue une compensation de pression entre une première partie (34) et une deuxième partie (36) sur des côtés différents du piston (20) de manoeuvre.

4. Vanne (10) 3/2 suivant l'une des revendications précédentes, **caractérisée en ce que** le premier sens (28) de déplacement est contraire au deuxième sens (30) de déplacement.

5. Vanne (10) 3/2 suivant l'une des revendications précédentes, **caractérisée**
- **en ce que** le premier sens (28) de déplacement s'étend du deuxième siège (18) de vanne au premier siège (16) de vanne et
- **en ce que** le deuxième sens (30) de déplacement s'étend du premier siège (16) de vanne au deuxième siège (18) de vanne.

6. Vanne (10) 3/2 suivant l'une des revendications précédentes, **caractérisée en ce que** la première partie (22) de piston a, du côté éloigné du premier siège (16) de vanne, une butée (40) fixe.

7. Vanne (10) 3/2 suivant l'une des revendications précédentes, **caractérisée en ce que** la deuxième partie (24) de piston a, du côté éloigné du deuxième siège (18) de vanne, une butée (42) limite fixe.

8. Vanne (10) 3/2 suivant l'une des revendications précédentes, **caractérisée en ce qu'**une surface (44) d'appui du premier siège (16) de vanne est plus petite qu'une autre surface (46) d'appui du deuxième siège (18) de vanne.

9. Frein de stationnement à fonctionnement pneumatique ayant une vanne (10) 3/2 suivant l'une des revendications précédentes.

10. Procédé pour faire fonctionner une vanne (10) 3/2 à commande pneumatique, notamment pour un frein de stationnement pneumatique, comprenant un piston (20) de manoeuvre mobile dans une direction (12) axiale dans une enveloppe (14) entre un premier siège (16) de vanne et un deuxième siège (18) de vanne, **caractérisé**
- **en ce que** le piston (20) de commande comprend une première partie (22) de piston et une deuxième partie (24) de piston que l'on déplace séparément dans la direction (12) axiale,
- **en ce que** l'on ferme le premier siège (16) de vanne par la première partie (22) de piston,
- **en ce que** l'on ferme le deuxième siège (18) de vanne par la deuxième partie (24) de piston et
- **en ce que** la première partie (22) de piston entraîne la deuxième partie (24) de piston dans un premier sens (28) de déplacement et en ce que la deuxième partie (24) de piston entraîne la première partie (22) de piston dans un deuxième sens (30) de déplacement.
